# EUROPEAN PATENT APPLICATION

(11) **EP 2 641 465 A2**
(43) Date of publication of application: **25.09.2013**
(21) Application number: 11841987.8
(22) Date of filing: 27.10.2011
(51) Int. Cl.: A01G 9/02, B01D 46/00, B01D 53/34

(54) **POT FOR VERTICAL WALL, AND MULTI-FILTER AND PORT SUPPORT FRAME USED THEREFOR**

(30) Priority: 17.11.2010 KR 20100011806 U; 17.11.2010 KR 20100011807 U; 01.07.2011 KR 20110065349
(71) Applicant: Green Infra Co., Ltd., Seocho-gu Seoul 137-130 (KR)
(72) Inventor: PARK, Chul-Hong, Seoul 137-070 (KR); KIM, Jae-Hong, Seoul 133-121 (KR); YUN, Young-Hwan, Yongin-si Gyeonggi-do 446-755 (KR); KIM, Sang-Min, Pyeongtaek-si Gyeonggi-do 451-851 (KR)
(74) Representative: Gulde Hengelhaupt Ziebig & Schneider
(86) International application number: PCT/KR2011/008057
(87) International publication number: WO 2012/067356

(57) **Abstract**

Disclosed is a port for a vertical wall, a multi-filter used therein, and a port support frame. In the port (20) of the present invention, a cover (30) is installed in a port body (21) having an interior space (22). A plurality of body filter holes (28) penetrate the port body (21). Soil (s) in which plants (p) are set is filled in the interior space (22). A plurality of vegetation holes (38) through which the plants (s) set in the soil (s) are formed in the cover (30), and cover filter holes (40) are formed between the vegetation holes (38) at locations corresponding to the body filter holes (28). Multi-filters (60) penetrate the body filter holes (28), the cover filter holes (40), and the soil (s). A support tubular body (52) forms an outer appearance of the multi-filter (50), and a filtering case (60) is installed in the support tubular body (52). The filtering case (60) includes a first filtering part (66) and a microorganism filtering part (68). A microorganism sheet (59) may be further included to surround the support tubular body (52).

## Description

### BACKGROUND OF THE INVENTION

### 1. Field of the invention

The present invention relates to a port for nursing plants in a vertical wall, a multi-filter used therein, and a port support frame for supporting the port on the vertical wall.

### 2. Description of the Prior Art

In recent years, efforts for afforesting vertical walls in various forms to make the vertical walls eco-friendly are being made. Examples of such vertical walls include vertical walls obtained by making inclined surfaces formed by cutting or forming the ground perpendicular to the ground, wall surfaces of large buildings, and the like.

Various methods of construction for afforesting inclined surfaces have been proposed. For example, Korean Patent No. 10-0419883 discloses an inclined surface afforestation reinforcing construction method, in which in order to afforest an inclined surface of a cut or formed ground, a soil layer is formed by using a frame and the frame is moved forward after formation of the soil layer to form a vegetation soil layer between the frame and a tip end of the soil layer.

However, according to the method, since a surface of the vegetation soil layer faces only in an upward direction with respect to the ground surface, the plants in the vegetation soil layer grow upward with respect to the ground surface. Thus, when people look at an inclined surface from the ground surface, one surface of the frame as well as plants growing on the inclined surface are viewed, considerably deteriorating the afforestation effect.

Further, according to the related art, it is very difficult to fix a soil layer along the vertical wall. In particular, the vegetation soil is scattered by rain and wind after the vertical wall is afforested, and thus the vegetation state cannot be properly maintained.

Recently, plant air cleaners for afforesting the wall surface of the interior of a large building and purifying the interior air by using the plants are widely used. Plants are set along the wall of the interior in the plant air cleaner to utilize the interior space of the building. If the plants are set from a lower side to an upper side along the wall in this way, a horizontal area of the interior occupied by the plant air cleaner is minimized. In contrast, if plants are set along the wall, a vertical area which is rarely used in the interior of the building can be utilized, which is relatively advantageous in utilization of space.

However, since plants should be set against the gravitational direction in order to set the plants by utilizing the wall of the interior of the building, it is relatively difficult to set the plants. Due to the problem, a part where plants are set from a lower side to an upper side of the wall of the interior of the building should be inclined.

Furthermore, soil is necessary to set plants in the wall of the interior of the building, in which case the soil should be at least slantly disposed so that the soil cannot flow due to gravity, and the inclination is preferably small. However, if the inclination at which the soil is disposed is too small, the interior space occupies too large a space, which is inefficient.

In addition, when some of the plants used in the plant air cleaner according to the related art are dead, they cannot be easily replaced. In particular, if some of the plants at a high location are dead, an operator should climb the wall while holding plants, soil, and working tools, pull the plants, and set new plants, which is very troublesome.

### SUMMARY OF THE INVENTION

Accordingly, the present invention has been made to solve the above-mentioned problems occurring in the prior art, and an object of the present invention is to provide a port for setting plants used in a plant air cleaner installed in a vertical wall.

Another object of the present invention is to pass air through soil in which plants are set to purify the air in a plant air cleaner, and particularly, to maximally utilize operations of the roots of the plants.

Another object of the present invention is to allow for easy replacement of plants in a plant air cleaner.

Another object of the present invention is to locate vegetation soil in a certain space in the interior of a port to locate the vegetation soil along a vertical wall such that the roots of plants are located in the vegetation soil and the stems and leaves of the plants are located outside the port.

Another object of the present invention is to provide a port support frame for easily and firmly fixing a port filled with vegetation soil for afforesting a vertical wall to the vertical wall.

In order to accomplish this object, there is provided a port for a vertical wall, including: a port body having first and second connecting bars connected to each other at a predetermined angle to have an interior space filled with soil, and having a plurality of body filter holes on one surface thereof; a cover configured to shield the interior space of the port body by connecting first and second connecting bars at a predetermined angle, having cover filter holes at locations corresponding to the body filter holes, and having vegetation holes through which plants pass between the cover filter holes; and multi-filters passing through the soil filled in the interior space, the body filter holes of the port body, and the cover filter holes of the cover to purify suctioned interior air while the interior air passes the multi-filters.

Each of the multi-filters includes: a support tubular body installed in the soil filled in the interior space of the port body and having first tubular body bars and second tubular body bars connected to each other to have a tubular shape opposite ends of which are opened; and a filtering case installed in an interior of the support tubular body, having first case bars and second case bars connected to each other at a predetermined angle to have a tubular shape opposite ends of which are opened, and having a first filtering part therein.

The port further includes distribution bars radially extending on an outer surface of the support tubular body and located in the soil filled in the interior space.

A microorganism filtering part is provided in an air flow path in the filtering case behind the first filtering part.

A plurality of distribution wings are installed in a row in a flow direction of air in an interior of the filtering case to be perpendicular to a direction in which air flows.

A microorganism sheet containing microorganisms in a substrate is provided to surround the support tubular body.

The distribution wings are disposed in a row in a wing shaft, and a fixing leg at one end of the wing shaft is fixed to and installed in the filtering case.

In accordance with another aspect of the present invention, a multi-filter including: a support tubular body having first tubular bodies and second tubular bodies connected to each other at a predetermined angle and having a tubular shape, opposite ends of which are opened; and a filtering case installed in an interior of the support tubular body, having first case bars and second case bars connected to each other at a predetermined angle, having a tubular shape, opposite ends of which are opened, and having a first filtering part in an interior thereof.

A plurality of distribution bars radially extend on an outer surface of the support tubular body.

The multi-filter further includes a microorganism sheet containing microorganisms in a substrate and surrounding the support tubular body.

The multi-filter further includes a microorganism filtering part provided in an air flow path in the filtering case behind the first filtering part.

A plurality of distribution wings are installed in a row in a flow direction of air in an interior of the filtering case to be perpendicular to a direction in which air flows.

The distribution wings have disk shapes and the distribution wings having different diameters are alternately disposed.

In accordance with still another aspect of the present invention, there is provided a port for a vertical wall, including: a body having first and second connecting bars connected to a body frame to form a wall in a net form and one of the widest areas is opened; a cover coupled to the body to shield the opened surface of the body, and having first and second connecting bars connected to a cover frame to form a wall in a net form; and body fixing members and cover fixing members formed at corresponding locations of the body and the cover, respectively, to be coupled to each other, wherein a plurality of vegetation holes, peripheries of which are formed by first rings, are provided in the cover such that plants set in vegetation soil filled in an interior of the body protrude to the outside.

The body has a flat hexahedral shape and further has a water supply hole for supplying water to the vegetation soil filled in the interior of the body on a surface of the body facing upward when the body is installed in a vertical wall.

Some of the vegetation holes are formed by connecting second rings having a diameter larger than that of the first rings with connecting bars, and vegetation holes having a diameter larger than that of the vegetation holes formed by the first rings are formed by cutting the connecting bars and removing the first rings.

The body fixing members and the cover fixing members are provided at opposite ends of the body and the cover, respectively, and heights of the body fixing members and the cover fixing members provided at opposite ends of the body and the cover are different such that the adjacent body fixing member and cover fixing member are coupled to each other by one screw.

Each of the body fixing members and the cover fixing members includes an extension piece integrally formed therewith, and a coupling piece protruding perpendicular to the extension piece and coupled to a port support frame.

The screw simultaneously penetrates a body fixing member and a cover fixing member of adjacent ports to be coupled to the port support frame, and a coupling bracket having stopping plates by which the ports are stopped at opposite ends thereof and a coupling part connecting the stopping plates at the ends of the coupling bracket such that the screw penetrates therethrough.

In accordance with yet another aspect of the present invention, there is provided a port support frame for a vertical wall, including: a support frame body having an upper wall and a lower wall formed along an upper end periphery and a lower end periphery of a bottom plate, and having end walls ends of which are connected to the upper wall and the lower wall along opposite end peripheries of the bottom plate; port positioning parts partitioned by a vertical partition wall protruding vertically from the bottom plate of the support frame body and on which ports are fixedly positioned; and positioning members protruding from the bottom surface of the port positioning parts to support corners of the ports and forming certain apertures between the bottom surface of the port positioning parts and the ports.

Aperture ribs are formed in the port positioning parts along a locations corresponding to middle parts of the ports, and a height of the aperture ribs is the same as that of positioning surfaces recessed in the positioning members.

Rib openings are formed in the aperture ribs, and a lower opening is formed in the lower wall such that water flows through the lower opening.

A horizontal partition wall is formed in the bottom plate to extend in parallel to the upper side wall to form water pipe passing parts in which water pipes are located at an upper portion of the port positioning parts.

A water supply opening is formed in the horizontal partition wall such that water transferred from the pipes passing through the water pipe passing parts is transferred to ports of the port positioning parts.

Pipe openings are formed in the end walls corresponding to opposite ends of the water pipe passing parts such that pipes extend between adjacent port support frames.

### Advantageous Effects

A port for a vertical wall, a multi-filter used therein, and a port support frame according to the present invention art have the following effects.

First, since the port of the present invention has a certain space filled with soil so that the roots of plants can be located therein and the plants can protrude to the outside, a plant air cleaner can be easily configured by disposing a plurality of ports and can be easily maintained and repaired.

Since the port of the present invention separates an air flow path along which air circulates from a soil layer in which plants grow to maximize an area where the soil in which the plants are set and air contact each other in purifying interior air, air can be purified efficiently by utilizing the operations of the roots of the plants.

Further, since the soil in which plants are set is located in the port of the present invention, the port can be installed vertically, minimizing an area of the interior bottom necessary for installation of a plant air cleaner.

In addition, since the multi-filter installed in the port is provided with a microorganism sheet having microorganisms, air can be purified efficiently. Further, since a filter unit can be separated from a filter maintaining box to be replaced if necessary, the air purifying effect can be maximized.

According to the port of the present invention, since first connecting bars and second connecting bars connected to a body frame and a cover frame of a body and a cover are connected to each other to meet each other at a predetermined angle, thereby forming a wall, ventilation and drainage of water can be improved while effectively locating vegetation oil in the port. Further, since plants are made to protrude to the outside by forming plant vegetation holes of a predetermined size in the cover, plants can be effectively afforested in the port by using the vegetation soil in the port.

According to the present invention, since rings forming the plant vegetation holes are removable, the size of the plant vegetation holes can be variously determined according to the sizes of the plants, making it possible to vegetate various plants.

According to the present invention, since the body and the cover are formed of ultra violet polyethylene, durability against ultraviolet rays is excellent and it is easy to fix the body and cover to a port support frame due to its flexibility. Further, various colors can be achieved and anti-chemical property against a nourishing liquid can be improved.

Further, the port support frame of the present invention is installed in a vertical wall by fixing a plurality of ports, and a plurality of port support frames can be sequentially installed along mounting rails installed in the vertical wall to fix the ports to the vertical wall. Thus, the present invention allows for partial replacement of the ports in the port support frames, and replacement of a port support frame to replace only necessary parts from the entire vertical wall. Thus, the vegetation state of the vertical wall can be more easily maintained and repaired.

Since the port support frame of the present invention partitions ports with vertical partitions therein, root resistance and waterproofing can be improved, so the roots of plants do not influence each other. Thus, the plants do not compete, effectively achieving the afforestation.

Further, since the port support frame of the present invention eliminates interactions between the port and the vertical wall, the plants of the port or the moisture of the port do not influence the building or structure having the vertical wall, making it possible to increase durability of the building or structure.

Further, since the port support frame of the present invention has port fixing bosses, decorations can be fixed by using screws, and various decorations can be allowed by using spaces formed in a water pipe passing part.

Furthermore, since drainage and insulation effects are sufficiently increased by forming a certain space between the port and the port support frame on the inner surface of the port support frame, the plants of the port can be vegetated more efficiently.

In addition, when the vertical wall is a wall surface of a building, the port support frame of the present invention acts as an insulation of the building wall, increasing the insulation effect of the building.

Moreover, if a wall surface of the building in a city is afforested by the port support frame, a thermal island effect in the city can be reduced.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic view showing a plant air cleaner;

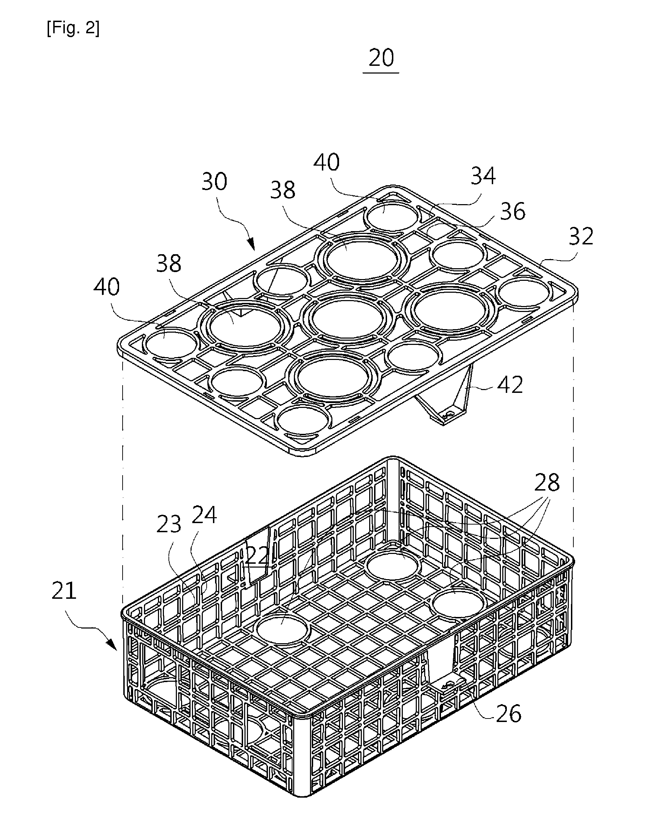

FIG. 2 is an exploded perspective view showing a main part of a port according to an embodiment of the present invention;
FIGS. 3A and 3B are front views showing covers of ports according to the embodiment of the present invention and a modification of the present invention, respectively;
FIG. 4 is a schematic side sectional view showing the port of FIG. 2;
FIG. 5 is a rear view showing an outer appearance of the port of FIG. 2;
FIG. 6 is an exploded perspective view showing a multi-filter according to an embodiment of the present invention;
FIG. 7 is a sectional view showing an internal configuration of the multi-filter according to the embodiment of the present invention;
FIG. 8 is a view showing an operation of a plant air cleaner employing the port according to the embodiment of the present invention;
FIG. 9 is a perspective view showing a port for a vertical wall according to another embodiment of the present invention;
FIG. 10 is an exploded perspective view showing the port of FIG. 9;
FIG. 11 is a perspective view showing a main part of a cover constituting the port of FIG. 9;
FIG. 12 is a side view showing the port of FIG. 9;
FIG. 13 is an in-use state view showing that the ports of FIG. 9 are connected to each other;
FIG. 14 is an in-use state view showing that the port of FIG. 9 is installed in a port support frame;
FIG. 15 is a perspective view showing another example of the cover of FIG. 9;
FIG. 16 is an in-use state view showing another example of coupling the port of FIG. 9 to a port support frame;
FIG. 17 is a perspective view showing a port support frame according to an embodiment of the present invention;
FIG. 18 is a front view showing the a port support frame according to an embodiment of the present invention;
FIG. 19 is a detailed perspective view showing a water pipe passing part constituting the port support frame according to the embodiment of the present invention;
FIG. 20 is a perspective view showing a vertical partition wall and a coupling hole constituting the port support frame according to the embodiment of the present invention; and
FIG. 21 is a detailed perspective view showing a port positioning part constituting the port support frame according to the embodiment of the present invention.

### DETAILED DESCRIPTION OF THE PREFERRED EMBODIMENTS

Hereinafter, a port for a vertical wall, a multi-filter used therein, and a port support frame according to exemplary embodiments of the present invention will be described in detail with reference to the accompanying drawings.

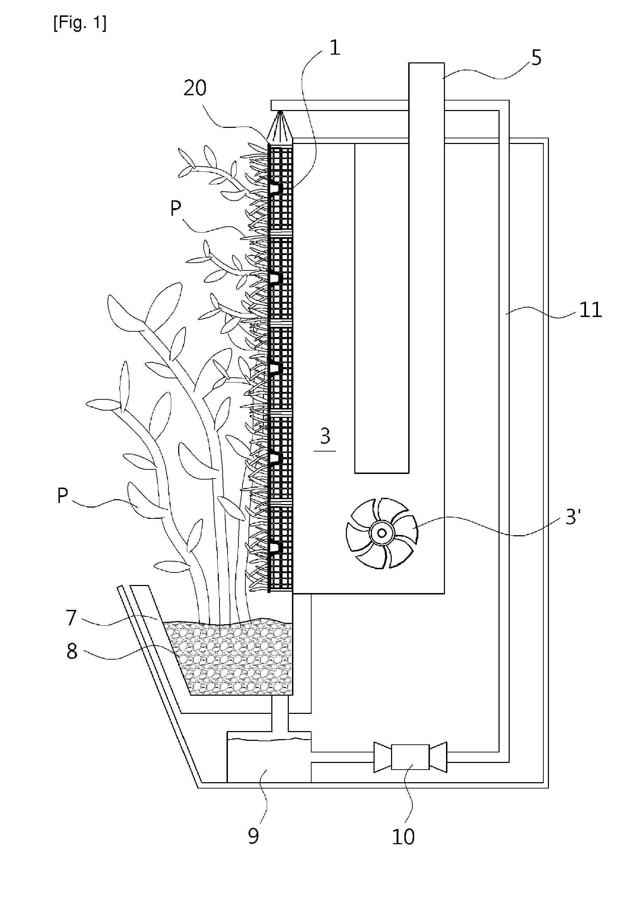

First, a plant air cleaner which is an example in which the port of the present invention is used will be briefly described with reference to FIG. 1.

The plant air cleaner includes a mounting wall 1, and the mounting wall 1 extends perpendicular to the bottom of a building. Of course, the mounting wall 1 may extend so as not to be perpendicular to but inclined with respect to the bottom of the building. However, in this case, the area of the building bottom occupied by the plant air cleaner is large, which is not preferable.

A flow passage 3 is formed at a rear side of the mounting wall 1. The flow passage 3 is a part where air having passed through the mounting wall 1 is collected to flow therethrough. Thus, the mounting wall 1 is configured such that a port 20, which will be described below, is installed therein, and through-holes (not shown) are formed in the mounting wall 1

A fan 3' is installed in the flow passage 3 such that interior air can pass through the flow passage 3 via the port 20. An outlet pipe 5 is installed at an end of the flow passage 3, and air purified while passing through the port 20 is exhausted into an interior space through the outlet pipe 5.

A water drainage unit 7 is installed at a lower portion of the mounting wall 1. Water drainage soil 8 is filled in the water drainage unit 7, and water may easily flow out through the water drainage soil 8. However, water does not have to easily flow out through the water drainage soil 8 but the drainage degree of the water drainage soil 8 should depend on the types of set plants.

A water storage tank 9 is connected to the water drainage unit 7. The water storage tank 9 is a part where water used in the plant air cleaner is temporarily collected. That is, the water having passed the water drainage unit 7 may be temporarily stored.

Water is supplied to the water storage tank 9 from the outside if necessary. The water in the water storage tank 9 is pressurized by a water supply pump 10 and transferred to the port 20. A water supply pipe 11 extends from the water storage tank 9 to an upper side of the mounting wall 1 to supply water to the port 20. The water supply pump 10 is installed in the water supply pipe 11.

Here, a configuration of the port 20 installed in the mounting wall 1 will be described in detail with reference to the accompanying drawings. The port 20 is generally formed of a synthetic resin through injection-molding. The frame of the port 20 is formed by a port body 21, and the port body 21 has a flat hexahedral shape, one widest area of which is opened and has an interior space 22. The port body 21 has a plurality of first connecting bars 23 and a plurality of second connecting bars 24 connected thereto. Of course, the entire port body 21 is not configured only by the first connecting bars 23 and the second connecting bars 24, but the port body 21 is formed by bars extending substantially transversely and longitudinally.

The first and second connecting bars 23 and 24 are connected to each other to cross each other at a predetermined angle. In the present embodiment, the first and second connecting bars 23 and 24 are connected to each other to be perpendicular to each other to form the wall of the port body 21 in a grid form. The tetragons of the grid form defined by connecting the first and second connecting bars 23 and 24 perpendicularly to each other have various sizes. Of course, most of them are squares but some are rectangles. The grid wall formed by the first and second connecting bars 23 and 24 makes ventilation and water supply or water drainage (hereinafter, referred to as 'water supply') excellent while maintaining vegetation soil s in the interior space 22 of the port body 21.

Body fixing members 26 are formed on opposite surfaces of the port body 21. The body fixing members 26 are adapted to be coupled to a cover 30, which will be described below. That is, the body fixing members 26 are coupled to cover fixing members 42, which will be described below. A detailed description of the body fixing members 26 will be omitted for convenience' sake.

A plurality of body filter holes 28 are formed on the bottom of the port body 21. The body filter holes 28 penetrate the bottom of the port body 21, and are formed at locations corresponding to cover filter holes 40, which will be described below.

The cover 30 is mounted to the port body 21 to shield the interior space 22. In the present invention, the cover 30 has a tetragonal plate shape. The cover 30 has a shape corresponding to the shape of the opened part of the port body 21, and thus the shape of the cover 30 becomes different if the shape of the opened part of the body 21 is different.

A cover frame 32 is formed at a periphery of the cover 30. The cover frame 32 has a tetragonal shape, and surrounds a part corresponding to an inlet of the port body 21. First and second connecting bars 34 and 36 are provided to be connected to the cover frame 32. The first and second connecting bars 34 and 34 are connected to the cover frame 32, and also are connected to each other at a predetermined angle. In the present embodiment, the first and second connecting bars 34 and 36 are perpendicular to each other such that the wall formed on an inner side of the cover frame 32 has a grid form. As described in the description of the port body 21, the first and second connecting bars 34 and 36 of the cover 30 also may have various forms of tetragons.

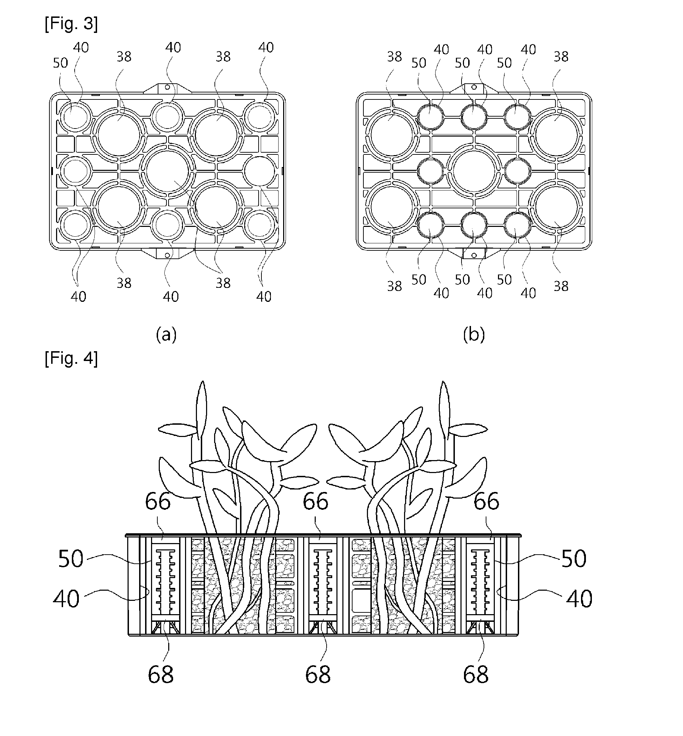

A plurality of vegetation holes 38 and a plurality of cover filter holes 40 are formed in the cover 30. The vegetation holes 38 and the cover filter holes 40 may be arranged in various forms. FIG. 3B shows that the vegetation holes 38 and the cover filter holes 40 are arranged in another form. For reference, the cover filter holes 40 are preferably located between the vegetation holes 38.

The cover fixing members 42 are provided at opposite ends of the cover 30, respectively. The cover fixing members 42 have a shape and a size to be coupled to the body fixing members 26. That is, if the cover 30 is positioned on and coupled to the port body 21, the cover fixing members 42 and the body fixing members 26 overlap each other to be integrally assembled. For reference, a structure such as a separate stopping step may be provided to couple the port body 21 and the cover 30.

Soil s is filled in the interior of the port 20, that is, the interior space 22. Plants p are set in the soil s. The plants p project to the outside through the vegetation holes 38 while being set in the soil s.

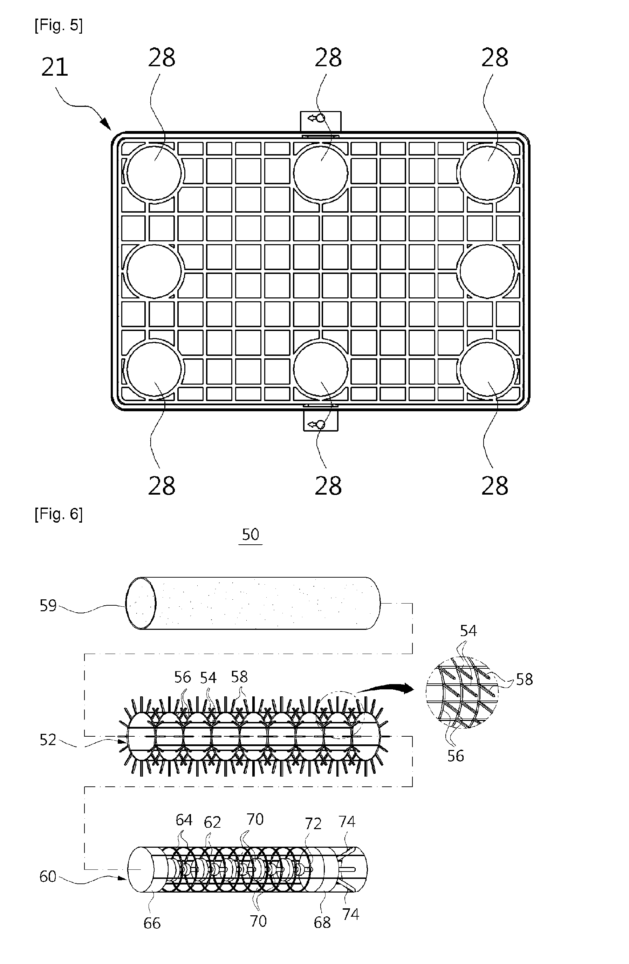

Meanwhile, multi-filters 50 pass through the body filter holes 28 of the port 20, the cover filter holes 40, and the soil s of the interior space 22. The configuration of the multi-filter 50 is well shown in FIG. 6. A support tubular body 52 forms an outermost side of the multi-filter 50. The support tubular body 52 has a cylindrical shape, opposite ends of which are opened in the present embodiment. However, the support tubular body 52 may have various tubular shapes which have opened opposite ends.

First tubular body bars 54 and second tubular body bars 56 cross each other to form the support tubular body 52 in a grid form. Although the first tubular body bars 54 and the second tubular bars 56 are perpendicular to each other in the present embodiment, they may meet each other at various angles. In this way, as the first and second tubular body bars 54 and 56 are connected to each other to form the support tubular body 52, air can pass to the interior and exterior of the support tubular body 52.

Distribution bars 58 radially protrude on an outer surface of the support tubular body 52. The distribution bars 58 are introduced into the soil s. The distribution bars 58 create apertures between the distribution bars 58 and the soil s so that air can easily contact microorganisms in the soil s. The distribution bars 58 are formed along an entire outer surface of the support tubular body 52.

A microorganism sheet 59 may be installed to surround the support tubular body 52. The microorganism sheet 59 is not inevitably necessary, but an air purifying operation can be promoted by the microorganism sheet 59. For example, the microorganism sheet 59 is a fiber substrate filled with microorganisms for purifying air. The microorganism sheet 59 is attached to an outer surface of the support tubular body 52, that is, the outer surfaces of the first tubular bars 54 and the second tubular body bars 56 such that the distribution bars 58 pass through the microorganism sheet 59.

A filtering case 60 is located in the interior of the support tubular body 52. The outer diameter of the filtering case 60 may be equal to or slightly smaller than the inner diameter of the support tubular body 52. The filtering case 60 has a shape corresponding to the shape of the interior space of the support tubular body 52. That is, the outer surface of the filtering case 60 is attached to the inner surface of the support tubular body 52. Opposite lengthwise ends of the filtering case 60 are opened.

First case bars 62 and second case bars 64 of the filtering case 60 cross each other to form a grid form. The first and second case bars 62 and 64 may meet each other at various angles. Since the first case bars 62 and the second case bars 64 cross each other to form the filtering case 60, air can easily flow to the interior and exterior of the filtering case 60.

A first filtering part 66 is provided at an inlet of the filtering case 60. The first filtering part 66 filters relatively large foreign substances in the air. For example, a mesh net or cloth through which air can pass may be used as the first filtering part 66.

A microorganism filter unit 68 is installed at a rear end of the interior of the filtering case 60. The microorganism filter unit 68 is similar to the microorganism sheet 59, and microorganisms are present in a substrate so that air can be purified by microorganisms while passing through the substrate.

For reference, the first filtering part 66 and the microorganism filter unit 68 may be installed at any locations in the filtering case 60, but the first filtering part 66 should be located in front of the microorganism filter unit 68, considering the flow direction of air.

Meanwhile, a plurality of distribution wings 70 are provided in the interior of the filtering case 60 so that the air flowing in the interior of the filtering case 60 can be easily transferred to the soil s. The distribution wings 70 are formed to have a predetermined area in a direction perpendicular to a flow direction of the air in the interior of the filtering case 60. The distribution wings 70 preferably have disk shapes. The distribution wings 70 serve to guide air to an inner surface of the filtering case 60 to transfer the air to the soil s.

In the present embodiment, a plurality of distribution wings 70 are sequentially provided in a wing shaft 72 extending in a lengthwise direction of the filtering case 60. In the shown embodiment, the distribution wings 70 having different sizes are alternately arranged. The interval between the distribution wings 70 is preferably set to consider flows of air. The width of opposite ends of the distribution wings 70 is smaller than the inner diameter of the filtering case 60. The distribution wings 70 may be inclined with respect to a flow direction of air.

A plurality of connecting legs 74 are provided at one end of the wing shaft 72 having the distribution wings 70 to fix the wing shaft 72 to the filtering case 60. Since the configuration of fixing the wing shaft 72 to the filtering case 60 with the connecting legs 74 is not the essence of the present invention, a detailed description thereof will be omitted. For example, they may be integrally formed through injection molding.

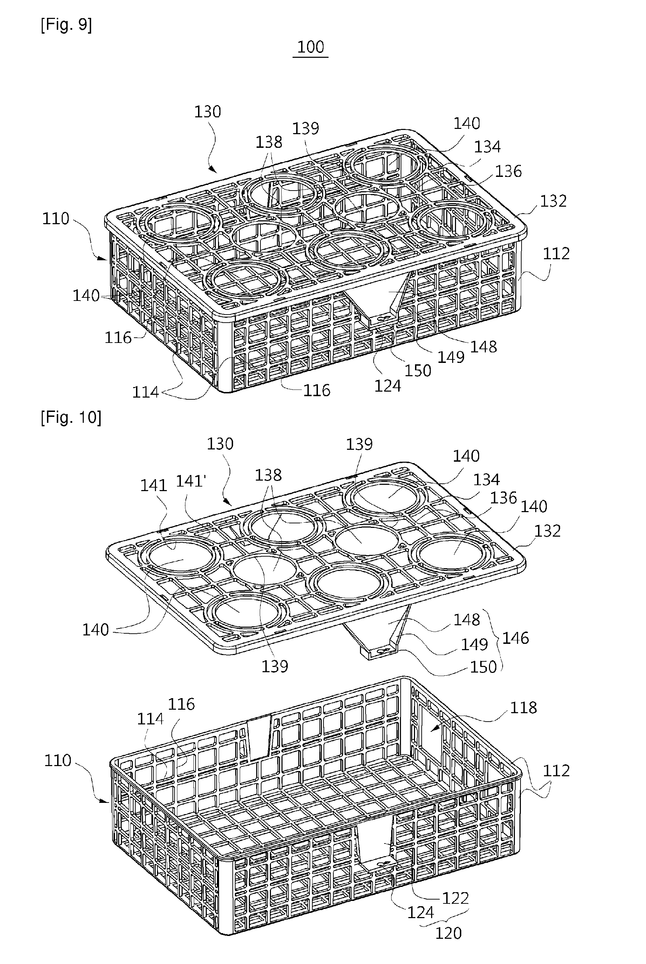

Next, a configuration of another type of port will be described with reference to FIGS. 9 to 16. The port 100 of the present embodiment may be used in the above-described plant air cleaner and may be used in afforestation of a vertical wall of an exterior of a building.

In the port 100 of the present embodiment, a body 110 injection-molded of a synthetic resin forms an outer appearance of the port 100. The body 110 has a flat hexahedral shape, and one of the widest areas of the body 110 is opened. A plurality of first connecting bars 114 and a plurality of second connecting bars 116 are connected to a body frame 112 which is the frame of the body 110. The body frame 112 is provided along peripheries of the surfaces of the body 110 in the present embodiment such that an upper end of the body 110 has a tetragonal shape, a lower end thereof also has a tetragonal shape, and the corners of the tetragonal shapes are connected to each other by bar shapes.

The first and second connecting bars 114 and 116 are connected to each other to cross each other at a predetermined angle. In the present embodiment, the first and second connecting bars 114 and 116 are connected to each other to be perpendicular to each other to form the wall of the body 110 in a grid form. The tetragons of the grid form defined by connecting the first and second connecting bars 114 and 116 perpendicularly to each other have various sizes. Of course, most of them are squares but some are rectangles. The grid wall formed by the first and second connecting bars 114 and 116 makes ventilation and water supply or water drainage (hereinafter, referred to as 'water supply') excellent while maintaining vegetation soil in the interior space 22 of the port body 21.

A water supply hole 118 is formed on one side surface of the body 110. The water supply hole 118 is a part for supplying water into the interior of the body 110. The water supply hole 118 is formed on the narrowest surface of the walls forming the body 110, and is formed on a surface corresponding to an upper surface when the port 100 is mounted to a port support frame 200, which will be described below.

Body fixing members 120 are formed on opposite side surfaces of the body 110. Each of the body fixing members 120 includes an extension piece 122 integrally formed on one wall of the body 110 to have a substantially plate shape, and a coupling piece 124 protruding perpendicular to the extension piece 122. A coupling hole (no reference numeral) for coupling a screw 162 is formed in the coupling piece 124.

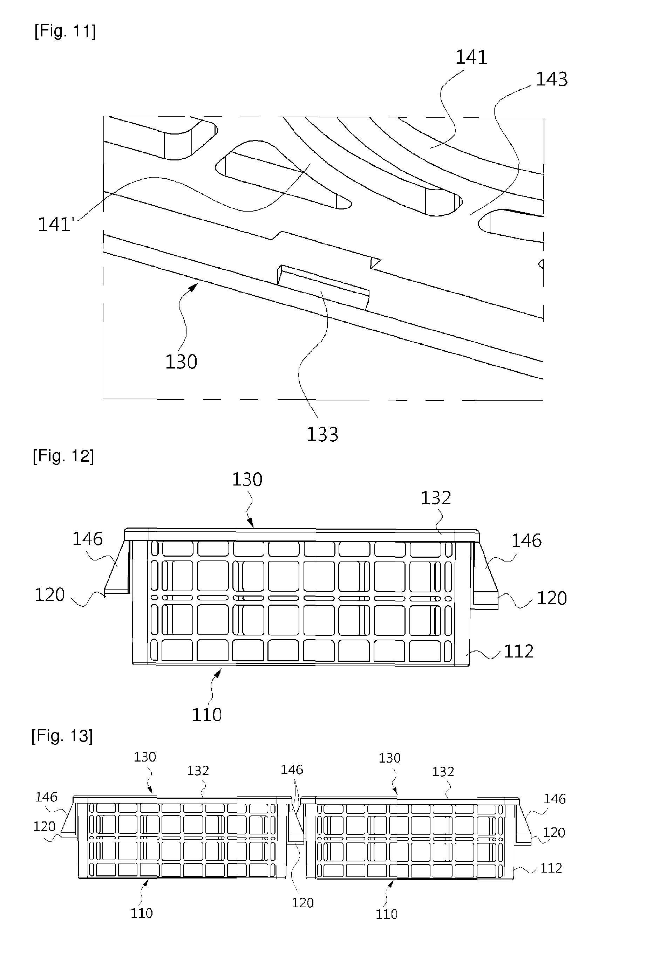

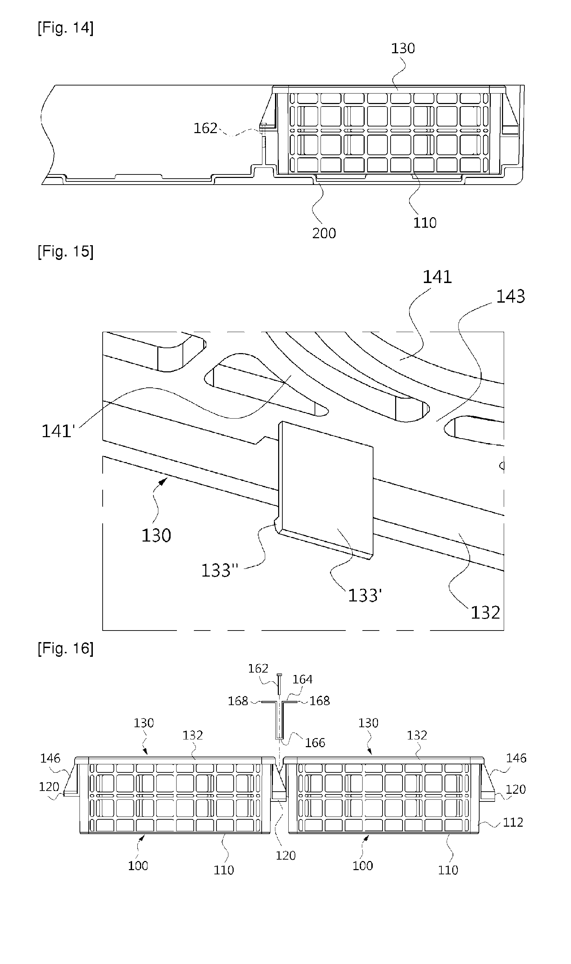

The body fixing members 120 are provided on opposite side surfaces of the body 110, and as shown in FIG. 12, locations of the coupling pieces 124, in more detail, heights of the coupling pieces 124 are different. That is, the left coupling piece 124 is situated at a location higher than the right coupling piece 124 with reference to the drawing. This structure is for coupling adjacent ports 100. That is, two ports 100 are installed in the port support frame 200 (see FIG. 14) in which the ports 100 are installed to be coupled to each other, in which case the body fixing members 120 couple the left coupling piece 124 of one port 100 and the right coupling piece 124 of the other port 100 which overlap each other. By doing so, the adjacent ports 100 may be coupled to the port support frame 200 with one screw 162.

Next, a cover 130 is provided to shield an opened part of the body 110. In the embodiment, the cover 130 is formed in a tetragonal plate shape. The cover 130 has a shape corresponding to the shape of the opened part of the body 110, and the shape of the cover 130 becomes different if the shape of the opened part of the body 110 is different.

A cover frame 132 forms a periphery of the cover 130. The cover frame 132 has a tetragonal shape, and surrounds a part of the body frame 112 forming a periphery of the opened part of the body 110. That is, the inner surface of the cover frame 132 is sized to surround an outer surface of the body frame 112 forming a periphery of the opened part of the body 110. Stopping steps 133 stopped by an upper end of the body frame 112 of the body 110 protrude from the inner surface of the cover frame 132. The outer surfaces of the stopping steps 133 are curved to smoothly cross the outer surface of the body frame 112 of the body 110 so as to be stopped. A plurality of stopping steps 133 are disposed at a predetermined interval along the inner surface of the cover frame 132. A part of the body frame 112 by which the stopping steps 133 are stopped protrudes further than the other parts to the outside. Of course, stopping recesses by which the stopping steps 133 are caught may be recessed on the outer surface of the body frame 112.

Meanwhile, a coupling piece 133' shown in FIG. 15 may be used instead of the stopping steps 133 to couple the cover 130 to the body 110. The coupling piece 133' protrudes from a lower surface of the cover 130 to face the inner surface of the cover frame 132 at a predetermined interval. The interval between the cover frame 132 and the coupling piece 133' is the same as a thickness of the body frame 112 installed along an upper end of the body 110. The coupling piece 133' has a plate shape, and a stopping step 133" is formed at a tip end of the coupling piece 133' to face the inner surface of the cover frame 132. The stopping step 133" is stopped by the body frame 112 on the inner surface of the body frame 112 so that the cover 130 is firmly coupled to the body 110.

A plurality of first and second connecting bars 134 and 136 are provided to be connected to the cover frame 132. The first and second connecting bars 134 and 136 are connected to the cover frame 132, and are connected to each other at a predetermined angle. In the present embodiment, the first and second connecting bars 134 and 136 are perpendicular to each other such that the wall forming the cover frame 132 forms a grid form. As described in the description of the body 110, the first and second connecting bars 134 and 136 of the cover 130 may form various tetragons.

A plurality of first vegetation holes 138 and a plurality of second vegetation holes 140 are formed in the cover 130. The first vegetation holes 138 and the second vegetation holes 140 have first rings 139 and 141 having a predetermined diameter. The second vegetation holes 140 have second rings 141' having a diameter larger than that of the first rings 141. The first rings 141 and the second rings 141' are connected to each other by connecting bars 143. The connecting bars 143 connect outer surfaces of the first rings 141 and inner surfaces of the second rings 141'. At least 4 connecting bars 143 are provided. Here, since the second rings 141 form the second vegetation holes 140 if the first rings 141 are removed by separating the connecting bars 143, a diameter of the second vegetation holes 140 is larger than that of the first vegetation holes 138.

Cover fixing members 146 are provided at opposite ends of the cover 130, respectively. The cover fixing members 146 are formed at locations corresponding to the body fixing members 120 of the body 110. The cover fixing members 146 and the body fixing members 120 are shaped and sized to be coupled to each other. That is, if the cover 130 is positioned on and coupled to the body 110, the cover fixing members 146 and the body fixing members 120 overlap each other to be integrally formed.

Each of the cover fixing members 146 also includes an extension piece 148 and a coupling piece 150, and the coupling piece 150 extends perpendicularly to a tip end of the extension piece 148. The coupling pieces 150 at opposite ends of the cover 130 have different heights. A reinforcing piece 149 is formed in the extension piece 148 of the cover fixing member 146, and the reinforcing piece 149 is also connected to the coupling piece 150. The reinforcing piece 149 is integrally formed with opposite ends of the extension piece 148 to meet the extension piece 148 at a predetermined angle, and is integrally formed with the coupling piece 150 to meet the coupling piece 150 at a predetermined angle.

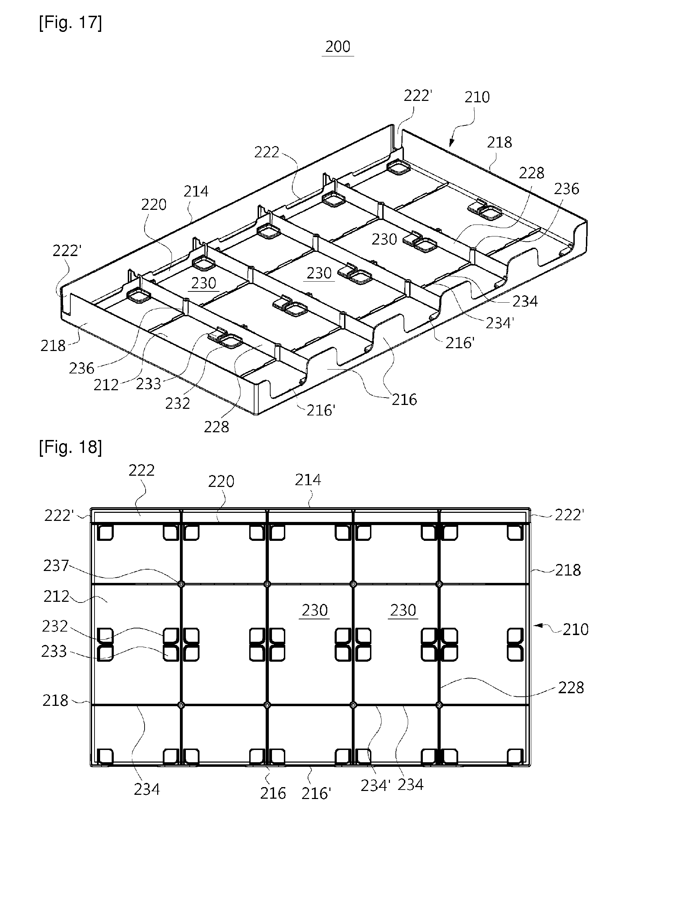

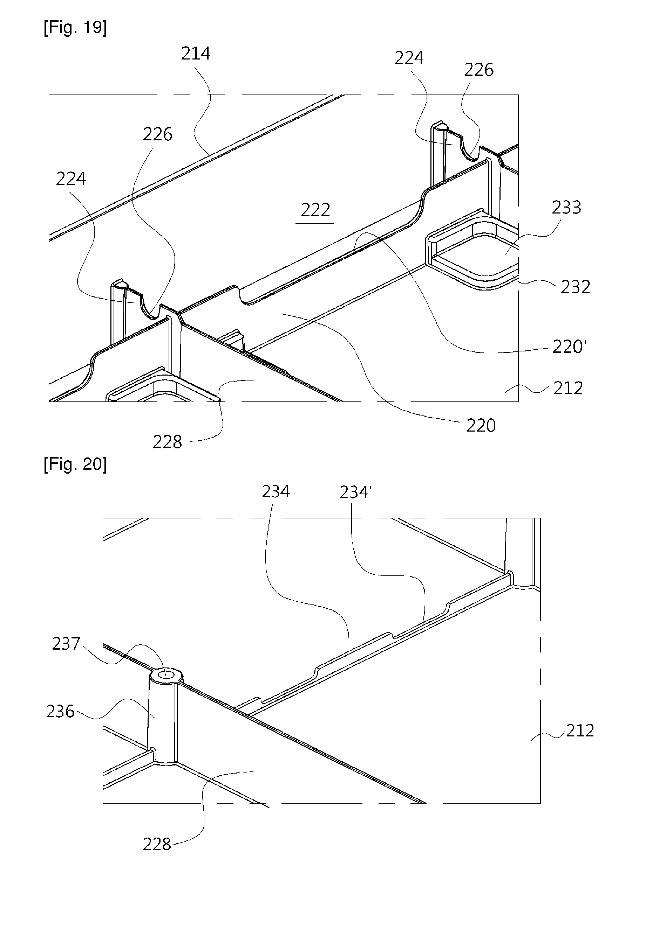

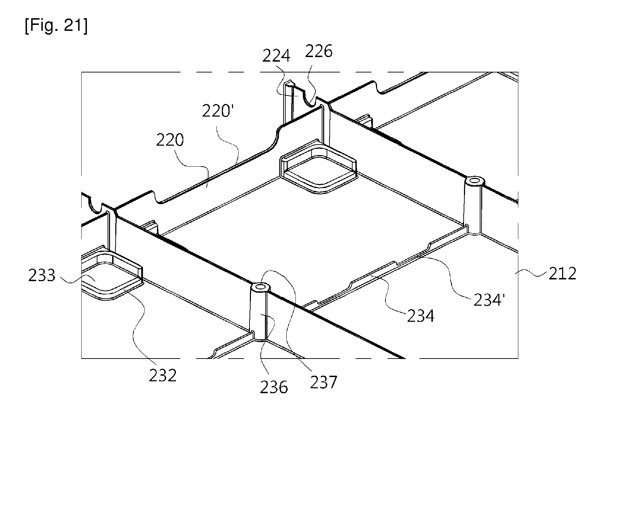

Next, a port support frame in which the port is installed according to an embodiment of the present invention will be described in detail with reference to FIGS. 17 to 22.

A support frame body 210 forms the frame of the port support frame 200 according to the present embodiment. The support frame body 210 is formed of a synthetic resin, in more detail, of a bulk molding compound. Such a material has a high strength, a very excellent durability, and an anti-impact property, and can show various colors. Further, the bulk molding compound has a low thermal conductivity and an excellent insulating effect, protecting plants from heat.

The support frame body 210 has a plate-shaped bottom plate 212, and a rear surface of the bottom plate 212 is installed on a front surface of a vertical wall. Opposite ends of the support frame body 210 are inserted into and fixed to mounting rails (not shown), such as section steels having a 'H' shaped cross-section, extending from the vertical wall perpendicular to the vertical wall. That is, the mounting rails are provided at opposite ends of the support frame body 210 such that the opposite ends of the support frame body 210 are mounted on and installed in the mounting rails, and a plurality of support frame bodies 210 are sequentially mounted on and installed in the pair of mounting rails.

An upper wall 214 protrudes from an upper end of the support frame body 210 along a periphery of the bottom plate 212, and a lower wall 216 protrudes from a lower end of the support frame body 210. A plurality of lower openings 216' are formed in the lower wall 216. The lower openings 216 are formed in port positioning parts 230, which will be described below, respectively. However, it is not necessary to form one lower opening 216' in one port positioning part 230, and at least one lower opening 216' may be sufficient.

End walls 218 are formed at opposite peripheries of the bottom plate 212, respectively, to connect the upper wall 214 and the lower wall 216. Corners of the support frame body 210 where the end wall 218 is connected to the upper wall 214 and the lower wall 216 may be formed to have a curved surface. This is because if the corners of the support frame body 210 are curved, it can be more easily mounted on the mounting rails.

A space is defined in the interior of the support frame body 210 by the upper wall 214, the lower wall 216, and the opposite end walls 218. A water pipe passing part 222 is partitioned in the space formed in the interior of the support frame body 210, by a horizontal partition wall 220 provided parallel to the upper wall 214 near the upper wall 214. The water pipe passing part 222 is partitioned at an upper end of the support frame body 210 by the upper wall 214 and the horizontal partition wall 220. The water pipe passing part 222 is partitioned by a plurality of pipe support ribs 224. The pipe support ribs 224 serve to support pipes installed in the water pipe passing part 222. To this end, a pipe positioning recess 226 having a substantially semicircular shape is formed at an upper end of each of the pipe support ribs 224.

A plurality of vertical partition walls 228 which are parallel to the end walls 218 protrude from the support frame body 210. Heights of the vertical partition walls 228 and the horizontal partition wall 220 are smaller than heights of the upper wall 214, the lower wall 216, and the end walls 218. Of course, the upper wall 214, the lower wall 216, and the end walls 218 have the same height. In the present embodiment, a total of four vertical partition walls 228 are formed, and a total of five port positioning parts 230 are defined by the vertical partition walls 228, the end walls 218, the lower wall 216, and the horizontal partition wall 220. Two ports 20 and 100 are positioned in the port positioning parts 230, respectively, in the present embodiment.

The port positioning parts 230 are sized to correspond to the ports 20 and 100, and a plurality of positioning members 232 protrude in the port positioning parts 230. The positioning members 232 protrude from the bottom plate 212, and protrude at parts corresponding to the corners of the ports 20 and 100, respectively. Since two ports 20 and 200 are positioned on one port positioning part 230 in the present embodiment, a total of eight positioning members 232 are formed. However, in the present embodiment, a total of six positioning members 232 are provided such that the adjacent positioning members 232 are integrally formed.

Positioning surfaces 233, in which the corners of the ports 20 and 100 are positioned, are recessed in the positioning members 232, respectively. The positioning surface 233 includes two sides of each of the positioning members 232 facing a central side of the port positioning part 230. Thus, the ports 20 and 100 are installed to have an interval from the bottom plate 212 by a height of the positioning surfaces 233. The positioning surfaces 233 are not inevitably necessary, but if the positioning surfaces 233 are recessed, the ports 20 and 100 are positioned on the positioning surfaces such that the installation locations thereof are not moved but fixed.

Aperture ribs 234 protrude in the port positioning parts 230 to correspond to middle portions of the ports 20 and 100, respectively. The aperture ribs 234 are not inevitably necessary if the sizes of the ports 20 and 100 are not large. However, the aperture ribs 234 prevent a swelling phenomenon of the ports 20 and 100 so that an aperture can be constantly maintained between the ports 20 and 100 and the bottom plate 212. The aperture ribs 234 protrude from the bottom plate 212, and a height of the aperture ribs 234 is the same as the height of the positioning surfaces 233 of the positioning members 232. Opposite ends of the aperture ribs 234 are connected to the vertical wall 218, the vertical partition wall 228, and the vertical partition wall 228, respectively.

Rib openings 234' are formed in the aperture ribs 234. When water is excessively supplied, the rib openings 234 allow water to drain through the interiors of the port portioning parts 230. Although two rib openings 234' are formed in one aperture rib 234, it is not inevitably necessary and one may be enough.

Coupling bosses 236 are formed in the vertical partition walls 228. The coupling bosses 236 are integrally formed with the vertical partition walls 228, and protrude from opposite surfaces of the vertical partition walls 228 such that lengthwise centers thereof are located at the centers of the vertical partition walls 228. Coupling holes 237 are formed in the coupling bosses 236. The coupling holes 237 are parts to which screws (not shown) for coupling the ports 20 and 100 to the coupling bosses 236 are coupled.

Hereinafter, the port, the multi-filter used therein, and the port support frame will be described in detail.

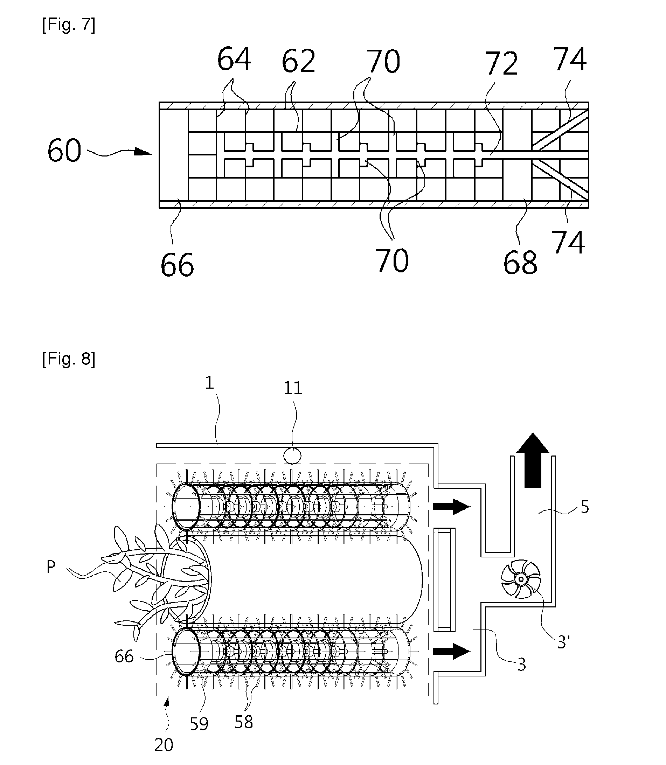

Purification of air will be described with reference to FIG. 8. The ports 20 and 100 according to the embodiment of the present invention are mounted to the mounting wall 1. Of course, the ports 20 and 100 may be directly mounted to the mounting wall 1 or the ports 20 and 100 may be mounted by the port support frame 200.

A part of the mounting wall 1 corresponding to at least the body filter hole 28 is opened so that the air from the body filter hole 28 of the port 20 and 100 can pass through the opened part of the mounting wall 1. Thus, if the air fan 3' is operated, the interior air passes through the plants p and the ports 20 and enters the flow passage 3. Of course, since there is no path for passing air in the port 100 when the port 100 is mounted to the mounting wall 1, air does not flow through the port 100.

Air is purified in the process of passing air through the plants p and the port 20. The air is purified by an operation of the leaves of the plants p, and is purified by the roots of the plants p, the microorganisms of the soil s, and the multi-filter 50 while passing through the port 20.

That is, as the air enters the interior of the multi-filter 50, relatively large foreign substances are filtered first while the air passes through the first filtering part 66. For example, hair and dust may be present.

If the air passes through the first filtering part 66, the soil s contacts the air through the filtering case 60 and the support tubular body 52. Of course, the air also contacts the microorganisms of the microorganism sheet 59 surrounding the support tubular body 52 to achieve an air purifying operation.

In particular, the distribution wings 70 guide the air flowing through the interior of the filtering case 60 toward the microorganism sheet 59 and the soil s to perform the air purifying operation more smoothly.

Meanwhile, an air purifying operation is performed by the microorganisms while the air passes through the microorganism filtering part 68. The purified air is transferred to the flow passage 3, and is transferred to the interior through the outlet pipe 5 again.

Here, the reason why the multi-filter 50 is firmly fixed to the soil s in the interior of the port body 21 of the port 20 is because the distribution bars 58 are piled deep into the soil s. The distribution bars 58 serve to guide the microorganisms in the soil s toward the multi-filter 50 or guide the air into the soil s.

The purification of the air while the air passes through the port 20 of the present invention may be described as follows. That is, the air purification of plants may be largely caused by microorganisms and plant emission materials.

First, the air is purified by microorganisms as the microorganisms in the leaves and roots of the plants absorb and remove contaminants. Here, the contaminants absorbed by the leaves are used as metabolism products of photosynthesis, and the contaminants absorbed by the soil are removed by the microorganisms in the roots or microorganisms in the multi-filter 50. Meanwhile, various plant emitted materials such as negative ions, aromas, oxygen, and moisture emitted from plants make the air comfortable, thereby improving the interior environment.

Meanwhile, the port 100 described in FIGS. 9 and 10 may be used in the above-described plant air cleaner and for afforestation of a vertical wall. The port 100 of the present invention couples the cover 130 to the body 110 while the interior of the body 110 is filled with vegetation soil to prevent the vegetation soil from being leaked to the outside. The stopping step 133 of the cover 130 is stopped by the body frame 112 of the body 110 and the cover fixing members 146 are coupled to the port support frame together with the body fixing members 20, so that the cover 130 is firmly fixed to the body 110.

If the cover 130 is coupled to the body 110, the wall in the form of a grid net, which is formed by the first and second connecting bars 114, 116, 134, and 136 maintains water supply and ventilation while preventing vegetation soil from being discharged to the outside.

Plants are set in the vegetation soil, and the plants protrude to the outside through the first and second vegetation holes 138 and 140. The first rings 139 and 141 form peripheries of the first and second vegetation holes 138 and 140, and since a diameter of the first rings 139 and 141 is smaller than the diameter of the second ring 141', they are used when relatively small plants are set. When relatively large plants are set, the second ring 141' forms a periphery of the second vegetation hole 140 by cutting the connecting bar 143 and removing the first ring 141. In this way, relatively large plants can be set in the port.

The port 100 is mounted to the interior of the port support frame 200 as shown in FIG. 14. The body fixing member 120 and the cover fixing member 146 of the port 100 are coupled and fixed to the port support frame 200 together with those of the adjacent port 100 by the screw 162. Then, since the body fixing member 120 and the cover fixing member 146 provided at opposite ends of the port 100 have different heights, the body fixing members 120 and the cover fixing members 146 of the adjacent ports 100 overlap each other, and accordingly, when the ports 100 are mounted to the port support frame 200, the front surfaces of the ports 100, that is, the cover 130 is located on the same plane on the whole.

The port support frame 200 is installed such that the opened front surface thereof faces a front side of the vertical wall, and the ports 100 are mounted to the port support frame 200, such that the vegetation holes 138 and 140 of the cover 130 face a front side of the vertical wall so that the vertical wall can be planted with trees protruding through the vegetation holes 138 and 140.

An upper portion of the port 100 installed in the port support frame 200, that is, a part of the port 100 where the water supply hole 118 faces a gravitational upper side. Accordingly, the water supplied from the pipe passing through the port support frame 200 enters the interior of the port through the water supply hole 118 to be transferred to the vegetation soil, while being supplied continuously.

Meanwhile, FIG. 16 shows that a coupling bracket 164 is used in coupling two ports at the same time. That is, the coupling bracket 164 is used when two ports 100 are coupled to the port support frame 200. In the coupling bracket 164, stopping plates 168 are provided at opposite sides of a 'U'-shaped coupling part 166. A screw 162 passes through a center of the coupling part 166 and is coupled to the port support frame 200 such that the stopping plate 168 is stopped by the covers 130 of the ports. In this way, since the screw 162 and the coupling bracket 164 couple the ports dually, the coupling state of the port becomes firm.

Next, the port support frame 200 shown in FIG. 17 will be described. The port support frame 200 is mounted on and installed in a plurality of pairs of mounting rails vertically installed in the vertical wall. A plurality of mounting rails are vertically disposed in rows in the vertical wall, and the port support frames 200 are sequentially installed between the mounting rails to be installed in the entire vertical wall. Opposite ends of the support frame body 210 of the port support frame 200 are hung on the mounting rails. In this way, the interior of the support frame body 210 is opened toward the front side of the vertical wall.

A water pipe (not shown) and the ports 20 and 100 are installed in the water pipe passing part 222 and the port positioning part 230 of the support frame body 210, respectively. In addition to the water pipe, optical fibers or wirings for illumination may be installed in the water pipe passing part 222.

Four corners of the ports 20 and 100 are positioned on the positioning surfaces 233 of the positioning members 232 in the port positioning part 230 of the support frame body 210. Thus, the four corners of the ports 20 and 100 are located on the positioning surfaces 233 of the positioning members 232 to be fixed so as not to be arbitrarily moved.

Since the vegetation soil is in the interiors of the ports 20 and 100 and plants are set in the vegetation soil, the vertical wall is afforested if the plants grow while the ports 20 and 100 are installed in the port positioning part 230.

While the ports 20 and 100 are installed in the port positioning parts 230 of the support frame body 210, certain intervals are formed between the rear surfaces of the ports 20 and 100 and the inner surface of the port positioning parts 230. This is because the four corners of the ports 20 and 100 are positioned on the positioning surfaces 233 of the positioning members 232 and are positioned on the aperture ribs 234.

Thus, certain apertures are formed between the ports 20 and 100 and the bottom plate 212 of the support frame body 210. Air is filled in the apertures to secure ventilation in summer, thereby helping vegetate the plants in the ports 20 and 100 excellently. The air in the apertures keeps the plants warm excellently, and the roots of the plants in the ports 20 and 100 prevent cold-weather damage. Further, the apertures may form a path through which air flows on the rear side of the ports 20 when the ports 20 and 100 are used in a plant air cleaner.

In addition, the apertures between the ports 20 and 100 and the bottom plate 212 serve to discharge water more smoothly when water is excessively supplied. That is, water flows through the apertures between the ports 20 and 100 and the bottom plate 212, the rib openings 234, the apertures between the ports 20 and 100 and the bottom plate 212, and the lower opening 216' of the lower wall 216.

Meanwhile, the water transferred from the water pipe passing through the water pipe passing part 222 passes through a water supply opening 220' of the horizontal partition wall 220 to be supplied to the ports 20 and 100. For reference, the water pipe extends to an adjacent support frame body 210 through a pipe opening 222'.

If time elapses and the plants in the ports 20 and 100 grow while the ports 20 and 100 are positioned on the port positioning parts 230, afforestation is performed. To this end, water is continuously supplied to the ports 20 and 100. That is, the water supplied through the water pipe is transferred from the water pipe passing part 222 to the ports 20 and 100 through the water supply opening 220'. The water transferred to the ports 20 and 100 is used to vegetate the plants.

Next, if any one of the plants in the ports 20 and 100 fails to grow properly or one of the ports 20 and 100 is damaged, only the defective port 20 or 100 may be separated and replaced. This can be achieved by separating the screw coupled to the coupling boss 236, withdrawing the corresponding port 20 or 100, and mounting another port 20 or 100 to couple the port 20 or 100 to the coupling boss 236 with a screw.

The scope of the present invention is not limited to the above-described embodiments but defined by the claims, and it is obvious that those skilled in the part to which the present invention pertains can variously modify and change the embodiments without departing from the scope of the present invention which is claimed in the claims.

For example, although it has been described that the microorganism sheet 59 is installed to surround the outer surface of the support tubular body 52 in the embodiment, the support tubular body 52 may be installed to surround the inner surface of the support tubular body 52.

The shape of the body 110 may not be a flat hexahedral shape. The body 110 may have various shapes.

Further, the heights of the coupling pieces 124 and 150 of the body fixing members 120 and the cover fixing members 146 formed at opposite sides of the port 100 are not necessarily different, and may have the same height to be coupled to the port support frame separately at different locations. However, in this case, the number of screws 162 is large and the number of manufacturing processes also is large.

Furthermore, the water pipe passing part 222 is not necessarily formed between the horizontal partition wall 220 and the upper wall 214. A configuration through which a pipe can pass may be formed at a location corresponding to an upper part of the upper wall 214, and the water pipe passing part 222 may not be separately installed and may pass between the ports 20 and 100.

### Industrial Applicability

The port for a vertical wall, the multi-filter, and the port support frame according to the present invention may be used to afforest a vertical wall such as an outer wall of a building, and the interior of a building can be afforested and air can be cleaned by configuring a plant air cleaner for purifying air by using plants in the building.

## Claims

1. A port for a vertical wall, comprising:
a port body having first and second connecting bars connected to each other at a predetermined angle to have an interior space filled with soil, and having a plurality of body filter holes on one surface thereof;
a cover configured to shield the interior space of the port body by connecting first and second connecting bars at a predetermined angle, having cover filter holes at locations corresponding to the body filter holes, and having vegetation holes through which plants pass between the cover filter holes; and
multi-filters passing through the soil filled in the interior space, the body filter holes of the port body, and the cover filter holes of the cover to purify suctioned interior air while the interior air passes the multi-filters.

2. The port as claimed in claim 1, wherein each of the multi-filters comprises:
a support tubular body installed in the soil filled in the interior space of the port body and having first tubular body bars and second tubular body bars connected to each other to have a tubular shape opposite ends of which are opened; and
a filtering case installed in an interior of the support tubular body, having first case bars and second case bars connected to each other at a predetermined angle to have a tubular shape opposite ends of which are opened, and having a first filtering part therein.

3. The port as claimed in claim 2, further comprising distribution bars radially extending on an outer surface of the support tubular body and located in the soil filled in the interior space.

4. The port as claimed in claim 3, wherein a microorganism filtering part is provided in an air flow path in the filtering case behind the first filtering part.

5. The port as claimed in claim 4, wherein a plurality of distribution wings are installed in a row in a flow direction of air in an interior of the filtering case to be perpendicular to a direction in which air flows.

6. The port as claimed in any one of claims 1 to 5, wherein a microorganism sheet containing microorganisms in a substrate is provided to surround the support tubular body.

7. The port as claimed in claim 6, wherein the distribution wings are disposed in a row in a wing shaft, and a fixing leg at one end of the wing shaft is fixed to and installed in the filtering case.

8. A multi-filter comprising:
a support tubular body having first tubular bodies and second tubular bodies connected to each other at a predetermined angle and having a tubular shape, opposite ends of which are opened; and
a filtering case installed in an interior of the support tubular body, having first case bars and second case bars connected to each other at a predetermined angle, having a tubular shape, opposite ends of which are opened, and having a first filtering part in an interior thereof.

9. The multi-filter as claimed in claim 8, wherein a plurality of distribution bars radially extend on an outer surface of the support tubular body.

10. The multi-filter as claimed in claim 8 or 9, further comprising a microorganism sheet containing microorganisms in a substrate and surrounding the support tubular body.

11. The multi-filter as claimed in claim 10, further comprising a microorganism filtering part provided in an air flow path in the filtering case behind the first filtering part.

12. The multi-filter as claimed in claim 11, wherein a plurality of distribution wings are installed in a row in a flow direction of air in an interior of the filtering case to be perpendicular to a direction in which air flows.

13. The multi-filter as claimed in claim 12, wherein the distribution wings have disk shapes and the distribution wings having different diameters are alternately disposed.

14. A port for a vertical wall, comprising:
a body having first and second connecting bars connected to a body frame to form a wall in a net form and one of the widest areas is opened;
a cover coupled to the body to shield the opened surface of the body, and having first and second connecting bars connected to a cover frame to form a wall in a net form;
and body fixing members and cover fixing members formed at corresponding locations of the body and the cover, respectively, to be coupled to each other,
wherein a plurality of vegetation holes, peripheries of which are formed by first rings, are provided in the cover such that plants set in vegetation soil filled in an interior of the body protrude to the outside.

15. The port as claimed in claim 14, the body has a flat hexahedral shape and further has a water supply hole for supplying water to the vegetation soil filled in the interior of the body on a surface of the body facing upward when the body is installed in a vertical wall.

16. The port as claimed in claim 15, wherein some of the vegetation holes are formed by connecting second rings having a diameter larger than that of the first rings with connecting bars, and vegetation holes having a diameter larger than that of the vegetation holes formed by the first rings are formed by cutting the connecting bars and removing the first rings.

17. The port as claimed in any one of claims 14 to 16, wherein the body fixing members and the cover fixing members are provided at opposite ends of the body and the cover, respectively, and heights of the body fixing members and the cover fixing members provided at opposite ends of the body and the cover are different such that the adjacent body fixing member and cover fixing member are coupled to each other by one screw.

18. The port as claimed in claim 17, wherein each of the body fixing members and the cover fixing members comprises an extension piece integrally formed therewith, and a coupling piece protruding perpendicular to the extension piece and coupled to a port support frame.

19. The port as claimed in claim 18, wherein the screw simultaneously penetrates a body fixing member and a cover fixing member of adjacent ports to be coupled to the port support frame, and a coupling bracket having stopping plates by which the ports are stopped at opposite ends thereof and a coupling part connecting the stopping plates at the ends of the coupling bracket such that the screw penetrates therethrough.

20. A port support frame for a vertical wall, comprising:
a support frame body having an upper wall and a lower wall formed along an upper end periphery and a lower end periphery of a bottom plate, and having end walls ends of which are connected to the upper wall and the lower wall along opposite end peripheries of the bottom plate;
port positioning parts partitioned by a vertical partition wall protruding vertically from the bottom plate of the support frame body and on which ports are fixedly positioned; and
positioning members protruding from the bottom surface of the port positioning parts to support corners of the ports and forming certain apertures between the bottom surface of the port positioning parts and the ports.

21. The port support frame as claimed in claim 20, wherein aperture ribs are formed in the port positioning parts along a locations corresponding to middle parts of the ports, and a height of the aperture ribs is the same as that of positioning surfaces recessed in the positioning members.

22. The port support frame as claimed in claim 21, wherein rib openings are formed in the aperture ribs, and a lower opening is formed in the lower wall such that water flows through the lower opening.

23. The port support frame as claimed in any one of claims 20 to 22, wherein a horizontal partition wall is formed in the bottom plate to extend in parallel to the upper side wall to form water pipe passing parts in which water pipes are located at an upper portion of the port positioning parts.

24. The port support frames as claimed in claim 23, wherein a water supply opening is formed in the horizontal partition wall such that water transferred from the pipes passing through the water pipe passing parts is transferred to ports of the port positioning parts.

25. The port support frames as claimed in claim 24, wherein pipe openings are formed in the end walls corresponding to opposite ends of the water pipe passing parts such that pipes extend between adjacent port support frames.
